(19) Europäisches Patentamt
European Patent Office
Office européen des brevets

(11) Veröffentlichungsnummer: **0 001 775**
**B1**

(12) # EUROPÄISCHE PATENTSCHRIFT

(45) Veröffentlichungstag der Patentschrift: **12.05.82**

(51) Int. Cl.³: **C 08 L 83/04**, D 21 H 1/34

(21) Anmeldenummer: **78101149.9**

(22) Anmeldetag: **14.10.78**

(54) **Verfahren zum Herstellen von klebrige Stoffe abweisenden Überzügen auf Basis von Polysiloxan und deren Verwendung zur Papierbeschichtung.**

(30) Priorität: **28.10.77 DE 2748421**

(43) Veröffentlichungstag der Anmeldung: **16.05.79 Patentblatt 79/10**

(45) Bekanntmachung des Hinweises auf die Patenterteilung: **12.05.82 Patentblatt 82/19**

(84) Benannte Vertragsstaaten: **BE CH DE FR GB NL SE**

(56) Entgegenhaltungen: **FR-A-2 202 142**

(73) Patentinhaber: **BAYER AG, Zentralbereich Patente, Marken und Lizenzen, D-5090 Leverkusen 1, Bayerwerk (DE)**

(72) Erfinder: **de Montigny, Armand, Dr., Walter-Flex-Strasse 17, D-5090 Leverkusen 1 (DE)**
Erfinder: **Toepsch, Hans, Dr., Am Wasserturm 20, D-5090 Leverkusen 3 (DE)**
Erfinder: **Büchner, Werner, Dr., Höhenstrasse 128, D-5090 Leverkusen 3 (DE)**

**EP 0 001 775 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Verfahren zum Herstellen von klebrige Stoffe abweisenden Überzügen auf Basis von Polysiloxan und deren Verwendung zur Papierbeschichtung

Die vorliegende Erfindung betrifft ein Verfahren zur haftungsmindernden Ausrüstung von dünnschichtigen Substraten mittels Organopolysiloxanbeschichtungen.

Es ist bekannt, daß man Oberflächen von Papier oder anderen festen Stoffen mit Organopolysiloxanen überziehen kann, um zu verhindern, daß klebrige Stoffe an diesen Oberflächen fest haften (vgl. z. B. W. Noll, »Chemie und Technologie der Silicone«, Weinheim, 1968, Seiten 520/521, und britische Patentschrift 11 11 156).

An die Verfahren zum Herstellen von klebrige Stoffe abweisenden Überzügen auf Basis Polysiloxan werden jedoch immer höhere Ansprüche gestellt. Es werden Beschichtungs-Verfahren gefordert, die imstande sind, bei kürzesten Verweilzeiten — d. h. hohen Maschinengeschwindigkeiten — zu völlig ausgehärteten Überzügen zu führen, ohne daß diese Eigenschaften durch sonstige Nachteile erkauft werden. So darf eine extrem kurze Aushärtungszeit im Trockenkanal nicht dazu führen, daß gleichzeitig die geforderte Verweilzeit im Auftragssystem, die bei Raumtemperatur mindestens 8 Stunden betragen soll, drastisch gekürzt wird. Es wäre daher wünschenswert, wenn bei Betriebstemperaturen sehr schnell reagierende Beschichtungssysteme bei Raumtemperatur eine Verarbeitungszeit von wesentlich mehr als 8 Stunden aufweisen würden. Ideal wäre, wenn die Verarbeitungszeit nur durch das Verdampfen des vorhandenen Lösungsmittels beschränkt würde und nicht durch das Vergelen oder gegebenenfalls durch eine Inaktivierung der Mischung.

Verfahren mit relativ hohen Aushärtungsgeschwindigkeiten — bei genügend langer Topfzeit — sind bekannt. Die hohe Geschwindigkeit wird jedoch bei den Verfahren des Standes der Technik dadurch erreicht, daß die Aushärtetemperaturen relativ hoch liegen, wobei die Mindesttemperatur, bei der wirtschaftliche Geschwindigkeiten möglich sind und bei der sicher ausgehärtete Überzüge vorliegen, im günstigsten Fall bei ca. 130°C±5°C liegen dürfte. Diese Temperaturen schränken die Zahl der beschichtbaren Substrate naturgemäß ein. Nicht beschichtbar sind somit z. B. Folien aus Materialien, die Temperaturen von höchstens 100°C zulassen. Mit den Beschichtungsmitteln der Verfahren des Standes der Technik lassen sich solche Folien nur beschichten, wenn Aushärtungszeiten von 60 Sekunden und länger in Kauf genommen werden und gegebenenfalls ein anfangs noch nicht völlig ausgehärteter Überzug toleriert wird.

Aus US-PS 33 85 727 ist z. B. eine Zusammensetzung bekannt, deren Härtung auf der Reaktion von Alkyltriacyloxysilanen mit $\alpha,\omega$-Polyorganosiloxandiolen in Gegenwart von organischen Zinnverbindungen beruht. Wie die entsprechenden Beispiele zeigen, liegen die Aushärtezeiten in der Größenordnung von 60 Sekunden.

Die Addition von organischen Isocyanaten mit mehr als zwei Isocyanatsorten führt gemäß DE-OS 21 35 673 zwar zu besonders gut ausgehärteten Überzügen, aber die Aushärtezeit wird nicht in dem gewünschten Maße reduziert (DE-OS 21 35 673, Seite 5).

Aus GB-PS 11 81 347 ist ein Verfahren bekanntgeworden, bei dem die Vernetzung des Polyorganosiloxandiols mittels eines Gemisches aus Methylwasserstoffpolysiloxan und einem Silicat mit abspaltbaren Monoalkylglycoläther-Gruppen in Gegenwart eines in organischen Lösungsmitteln löslichen organischen Isocyanats mit mehr als zwei Isocyanat-Gruppen, durchgeführt wird. Die Aushärtegeschwindigkeit (sie beträgt bei 82°C 30 sec) ist auch in diesem Falle nicht ausreichend (vgl. Beispiel 7). Wie aus dem Beispiel Nr. 5 von GB-PS 11 81 347 zu sehen ist, ist darüber hinaus die Topfzeit völlig unzureichend, wenn davon ausgegangen wird, daß die Zeit der möglichen Verarbeitung mindestens die Dauer einer Arbeitsschicht, d. h. 8 Stunden, ausmachen soll. Oft sind auch längere Zeiten wünschenswert.

Gegenstand der vorliegenden Erfindung ist nun ein Verfahren zur Herstellung haftungsmindernder Beschichtungen auf dünnschichtigen Substraten durch Auftragen eines lösungsmittelhaltigen Gemisches, bestehend aus

(A) $\alpha,\omega$-Polyorganosiloxandiolen,
(B) Si-H-haltige Organosiloxanen,
(C) Alkyl- bzw. Alkenyltriacetoxysilanen,
(D) organischen Isocyanaten mit mehr als zwei Isocyanatresten,
(E) Härtungskatalysatoren,

dadurch gekennzeichnet, daß dem Gemisch vor der Aushärtung das Umsetzungsprodukt (F) eines Chlormethylpolymethylsiloxans der Formel

$$ClCH_2(CH_3)_2Si[OSi(CH_3)CH_2Cl]_nOSi(CH_3)_2CH_2Cl$$

wobei n einen Wert von 2—200 bedeutet,
mit maximal äquivalenten Mengen eines primären Amins, dessen organischer Rest aus einen Alkyl- bzw. einem Cycloalkylrest mit 4—18 C-Atomen besteht und wobei jedoch mindestens 20% der Chlormethylsiloxyeinheiten umgesetzt werden, in einer Menge von 0,5—10 Gew.-% — bezogen auf die

Komponente (A) — zugesetzt wird.

Das erfindungsgemäße Verfahren weist die obengenannten Nachteile nicht auf. Die bei 80°C erstaunlich kurzen Aushärtungszeiten gehen nicht auf Kosten der Qualität des Films, der hervorragende Härte besitzt und z. B. gegenüber organischen, in den Klebern des Handels vorkommenden Lösungsmitteln resistent ist. Sie gehen ebenfalls nicht auf Kosten der Verarbeitungszeiten, die je nach Konzentration der Komponenten sich zwischen 24 Stunden und 48 Stunden bewegen, ohne daß organische Ketone anwesend sein müssen.

Es war vor allem nicht vorhersehbar, daß die besonderen qualitativen Merkmale durch Zusatz einer Morpholin-Komponente erzielt werden, da ja eine derartige Komponente — beginnend beim Herstellen der Mischung — durch die Säuregruppen des Vernetzers (c) völlig neutralisiert werden sollte.

Die Anwendung des erfindungsgemäßen Verfahrens beschränkt sich jedoch nicht nur auf Beschichtungsvorgänge bei Temperaturen unter 100°C. Bei den in modernen Beschichtungsanlagen möglichen Temperaturen von 150 bis 200°C werden extrem kurze Aushärtungszeiten erreicht, die oft das Vielfache der Aushärtungsgeschwindigkeit von Systemen der Verfahren des Standes der Technik ausmachen.

Die erfindungsgemäß eingesetzten $\alpha,\omega$-Polyorganosiloxandiole, die vorzugsweise ausschließlich Methylreste tragen, sind bekannt. Sie weisen eine Viskosität von ca. $10^5$ bis $10^7$ mPa · s bei 20°C auf, wobei diese Viskositäten gegebenenfalls durch Abmischen eingestellt werden. Gleichfalls bekannt sind die wasserstoffhaltigen Methylsiloxane, die bevorzugt linear aufgebaut sind und durch Trimethylsiloxy-Gruppen beidseitig blockiert sind. Bevorzugt werden Verbindungen mit 10 bis 50 $CH_3Si(H)O$-Einheiten. Sie werden in Mengen von 0,3 bis 20 Gewichtsprozent, bezogen auf das vorliegende Polyorganosiloxandiol, eingesetzt.

Die eingesetzten Alkyl- bzw. Alkenyltriacetoxysilane kommen in Mengen von 8 bis 20, vorzugsweise von 12 bis 16 Gewichtsprozent, bezogen auf (A), zum Einsatz. Sie sind z. B. aus DE-OS 2 135 673 bekannt. Bevorzugt wird Vinyltriacetoxysilan eingesetzt.

Auch die organischen Polyisocyanate sind bekannt (vgl. z. B. DE-OS 2 135 673). Eingesetzt werden 6 bis 35 Gewichtsprozente, bezogen auf (A). Die als Härtungskatalysatoren gleichfalls bekannten Schwermetallcarboxylate oder Dialkylzinncarboxylate sind z. B. Dibutylzinndiacetat, Zinnoktoat, Dibutylzinndilaurat.

Ihre Einsatzmengen betragen 1 bis 20 Gewichtsprozente, bezogen auf (A), vorzugsweise 2 bis 8%. Vorzugsweise wird Dibutylzinndiacetat eingesetzt.

Das erfindungsgemäß eingesetzte Aminosiloxan ist ein Umsetzungsprodukt eines Chlormethylpolysiloxans der Formel

$$ClCH_2(CH_3)_2Si\left[\begin{array}{c} CH_2Cl \\ | \\ OSi(CH_3) \end{array}\right]_n OSi(CH_3)_2CH_2Cl$$

wobei n eine Zahl von 2 bis 200, bevorzugt 4—100, bedeutet,

mit maximal äquivalenten Mengen organischen primären Amins, in dem der organische Rest ein linearer oder cyclischer aliphatischer Rest mit 4 bis 18 C-Atomen darstellt.

Die Art der primären organischen Amine wird weniger durch ihre chemischen Eigenschaften als durch ihre Zugänglichkeit, ihre Handhabungsmöglichkeiten, physiologischen Eigenschaften usw. bestimmt.

Geeignete Verbindungen sind zum Beispiel: Butylamin, Hexylamin, Cyclohexylamin, 2-Äthylhexylamin, Allylamin.

Die Chlormethylchlorsilane werden durch Cohydrolyse und anschließende saure Äquilibrierung in die gewünschten Chlormethylsiloxane übergeführt. Die Umsetzung mit Aminen findet in einem organischen Lösungsmittel, wie z. B. Toluol, Xylol oder Benzol statt. Dabei wird darauf geachtet, daß maximal äquivalente Mengen Amin zur Reaktion gelangen. Dadurch wird die Bildung von Disilamorpholin-Strukturen bevorzugt, so daß je nach Menge des zugesetzten Amins Gruppierungen der Formel

$$ClCH_2(CH_3)_aSiO_{\frac{3-a}{2}} \qquad (I)$$

wobei a = 1 oder 2 ist, und der Formel

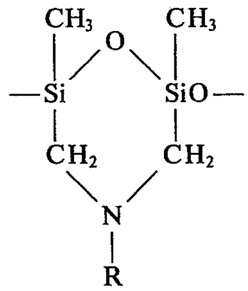

(II)

wobei R durch die weiter oben erfolgten Angaben festgelegt ist, vorliegen. Es werden jedoch mindestens 20%, bevorzugt 30–80%, der Chlormethylsiloxyeinheiten umgesetzt.

Die eingestezten Mengen an Reaktionsprodukt belaufen sich auf 0,5–10 Gewichtsprozent, bezogen auf (A), vorzugsweise 1 bis 5 Gew.-%.

Das Auftragen der Gemische auf haftmindernd gegenüber Klebstoffen zu machenden Substraten geschieht durch die üblichen Verfahren, z. B. durch Tauchen, Aufwalzen, Besprühen, Streichen, Gießen usw. Die Härtung erfolgt je nach Natur des Substrats zwischen 80 und 200°C.

Das erfindungsgemäße Verfahren soll nun anhand der folgenden Beispiele noch näher erläutert werden (%-Angaben sind Gew.-%).

Beispiel A

a) Herstellung von 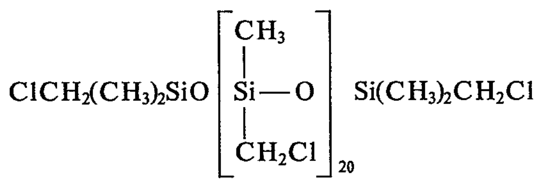

Ein Gemisch von 129 g (0,9 Mol) $ClCH_2(CH_3)_2SiCl$ und 1471 g (9 Mol) $ClCH_2(CH_3)SiCl_2$ wird unter Rühren in 3600 g $H_2O$ gegeben, wobei darauf zu achten ist, daß die Temperatur nicht wesentlich über 30°C hinaussteigt. Nach vollendeter Zugabe wird noch eine Stunde gerührt. Die wäßrige Phase wird vom Hydrolysat getrennt und verworfen.

Die Siloxanphase wird getrocknet und anschließend 5 Stunden bei 150°C äquilibriert (3% Bleicherde).

Ausbeute: 894 g
$n_D^{20}$: 1,4689
Cl-%: 32,6%

b) Herstellung des Disilamorpholinsiloxans

432 g des obigen Chlormethylsiloxans (3,97 g Äquivalent-Chlor) werden mit 1800 g getrocknetem Toluol vermischt und auf 60°C aufgeheizt. Zu dieser Lösung wird innerhalb von 120 Minuten ein Gemisch aus 1212 g Triäthylamin (12,00 Mol), 196,4 g Cyclohexylamin (1,984 Mol) und 1200 g Toluol zugetropft. Nach vollendeter Zugabe wird 2 Stunden bei 60°C gerührt, gekühlt und abfiltriert. Anschließend wird das Filtrat bis 110°C eingeengt, so daß eine ca. 28–30%ige toluolische Lösung entsteht. Nachdem abgekühlt wurde, wird über ein Filtrierhilfsmittel filtriert.

Ausbeute: 1600 g einer ca. 28%igen toluolischen Siloxanlösung.

Die N-Analyse des vom Lösungsmittel befreiten Produkts weist folgende Werte auf:

% Basen N: 3,08
% prim. N: 0,01
% sek. N: 0,26
% tert. N: 2,82

Die Disilamospholinstruktur wird durch IR-Spektroskopie belegt. In den folgenden Beispielen wurde jeweils mit Ausnahme des Beispiels 3 die 28%ige Lösung eingesetzt.

Beispiel 1

20 g $\alpha,\omega$-Dihydroxypolydimethylsiloxan mit der Viskosität von $10^7$ cP bei 20° C werden in 80 g Toluol gelöst und mit 1,5 g eines mit Trimethylsiloxy-endblockierten Methylwasserstoffsiloxans mit ca. 30 $CH_3Si(H)O$-Einheiten versetzt.

Diese Mischung wird unter Rühren mit 300 g Toluol, 2,8 g Vinyltriacetoxysilan, 0,9 g Disilamorpholinsiloxanlösung aus Beispiel A und 1,6 g Dibutylzinndiacetat versetzt. Anschließend werden unter weiterem Rühren 7,5 g einer ca. 30%igen Lösung von N,N',N''-Tris-(6-isocyanatohexyl)-biuret in Toluol zugemischt.

Mit dieser Lösung wurde in einem Trockenofen — der keine Vorrichtung für interne Luftzirkulation besitzt — eine Reihe von Beschichtungen durchgeführt.

| Zeit A [St] | Temperatur [°C] | Zeit B [sek] | Substrat | Rakel [N$^{\underline{o}}$] | Aushärtung | Lösungsmittel-Festigkeit |
|---|---|---|---|---|---|---|
| 0 | 85 | 15 | Papier | 30 | + | + |
| 1 | 85 | 15 | Papier | 30 | + | + |
| 2 | 85 | 15 | Papier | 30 | + | + |
| 3 | 85 | 15 | Papier | 30 | + | + |
| 4 | 85 | 15 | Papier | 30 | + | + |
| 5 | 85 | 15 | Papier | 30 | + | + |
| 10 | 85 | 15 | Papier | 30 | + | + |

Versuchsreihe 2

| Zeit A [St] | Temperatur [°C] | Zeit B [sek] | Substrat | Rakel [N$^{\underline{o}}$] | Aushärtung | LM-Festigkeit |
|---|---|---|---|---|---|---|
| 0 | 150 | 7 | Papier | 30 | + | + |
| 1 | 150 | 7 | Papier | 30 | + | + |
| 2 | 150 | 7 | Papier | 30 | + | + |
| 3 | 150 | 7 | Papier | 30 | + | + |
| 4 | 150 | 7 | Papier | 30 | + | + |
| 5 | 150 | 7 | Papier | 30 | + | + |
| 10 | 150 | 7 | Papier | 30 | + | + |

Versuchsreihe 3

| Zeit A [St] | Temperatur [°C] | Zeit B [sek] | Substrat | Rakel [N$^{\underline{o}}$] | Aushärtung | LM-Festigkeit |
|---|---|---|---|---|---|---|
| 0 | 150 | 7 | Papier | 50 | + | + |
| 10 | 150 | 7 | Papier | 50 | + | + |

Versuchsreihe 4

| Zeit A [St] | Temperatur [°C] | Zeit B [sek] | Substrat | Rakel [№] | Aushärtung | LM-Festigkeit |
|---|---|---|---|---|---|---|
| 0 | 85 | 15 | PE-Folie | 30 | + | + |
| 1 | 85 | 15 | PE-Folie | 30 | + | + |
| 2 | 85 | 15 | PE-Folie | 30 | + | + |
| 3 | 85 | 15 | PE-Folie | 30 | + | + |
| 4 | 85 | 15 | PE-Folie | 30 | + | + |
| 5 | 85 | 15 | PE-Folie | 30 | + | + |
| 10 | 85 | 15 | PE-Folie | 30 | + | + |

Zeit A:
Zeit vom Zeitpunkt des Ansatzes des Gemisches bis zum Auftrag.
Zeit B:
Aushärtezeit.
Rakel:
Um Aussagen über die Aushärtung unter erschwerten Bedingungen zu machen, wurde mit einem Rakel № 50 große Mengen der Mischung auf das Substrat gebracht.
Aushärtung:
Die Aushärtung wurde 15 Sekunden, nachdem das beschichtete Material den Ofen verlassen hatte, durch kräftiges Reiben mit der Fingerkuppe geprüft. Waren dabei (Kontrolle im Gegenlicht) geringste Spuren festzustellen, erfolgte eine negative Beurteilung.
LM-Festigkeit:
Die Lösungsmittelfestigkeit wurde durch Reiben mittels eines mit Äthylacetat getränkten Wattebausches geprüft. Durch wiederholtes Reiben (10×) bei einem Druck von ca. 1470—1961 mN (gegebenenfalls Kontrolle auf der Waage) entsteht bei nicht LM-resistenten Filmen ein, durch eine alkoholische Rhodamin-Lösung, einfärbbarer Streifen. Dieser Schnelltest erfolgte innerhalb von 15 Minuten nach Verlassen des Trockenofens.

## Beispiel 2

Die im Beispiel 1 hergestellte Lösung wurde mit einer nach Beispiel 3 der DE-OS 2 135 673 hergestellten Mischung verglichen. Diese Mischung enthielt neben den üblichen Bestandteilen ein Umsetzungsprodukt von Hexamethylendiisocyanat mit Wasser in Toluol.

| Zeit A [St] | Temperatur | Zeit B | Substrat | Aushärtung | Produkt Beispiel |
|---|---|---|---|---|---|
| 0 | 150 | 7 | Papier | + | 1 (erfindungsgemäß) |
| 0 | 150 | 7 | Papier | – | 3 (DE-OS 21 35 673) |
| 0 | 150 | 10 | Papier | – | 3 |
| 0 | 150 | 15 | Papier | + | 3 |
| 1 | 85 | 15 | Papier | + | 1 |
| 1 | 85 | 15 | Papier | – | 3 |
| 1 | 90 | 30 | Papier | – | 3 |
| 1 | 90 | 60 | Papier | – | 3 |

## Beispiel 3

Die im Beispiel 1 hergestellte Mischung wird wiederholt mit der Ausnahme, daß als Disilamorpholinsiloxan ein Produkt
a) mit 1,56% tertiärem N,
b) mit 2,64% tertiärem N
Verwendung findet. Für a) und b) gilt:

| Zeit A | Temperatur | Zeit B | Substrat | Aushärtung | LM-Festigkeit |
|---|---|---|---|---|---|
| 0 | 85 | 15 | Papier | + | + |
| 8 | 85 | 15 | Papier | + | + |

## Beispiel 4

a) 50 kg einer Mischung nach Beispiel 1 wurden in einer Beschichtungsmaschine auf »Corona-vorbehandelte« HD-Polyäthylenfolie mit Hilfe eines Contra-Coaters aufgetragen. Die Trockenkanaltemperatur betrug 85° C. Nach einer Verweilzeit von 10 Sek. im Kanal war der Siloxanfilm wischfest ausgehärtet.

Die Prüfung der Lösungsmittelfestigkeit erfolgte wie in Beispiel 1 beschrieben, jedoch mit der Ausnahme, daß schon nach 10 Min. offener Lagerzeit geprüft wurde. Die Ergebnisse waren positiv.

b) In einem weiteren Maschinenversuch wurde der obige Ansatz so abgewandelt, daß die eingesetzte Menge N,N,N″-Tris-(6-isocyanatohexyl)-biuret um 1/3 erhöht wurde. Der Siloxanfilm war sofort nach Verlassen des Trockenkanals völlig lösungsmittelfest gegen Äthylacetat.

Die Trennwerte, geprüft mit dem Tesaband 659 (Hersteller Fa. Beiersdorf AG), lagen bei 2–4 g/cm Streifenbreite. Diese Werte gelten sowohl für Messungen an frisch siliconisierten Folien (Prüfbeginn sofort nach Verlassen des Trockenkanals) als auch für Messungen, die nach einer Lagerung der Folien von 4 Tagen durchgeführt wurden.

Parallelversuche mit einem herkömmlichen Siliconbeschichtungsmittel ergaben bei Prüfungen, die sofort nach Verlassen des Trockenkanals durchgeführt wurden, Werte, die mindestens um das fünffache höher lagen. Prüfungen, die nach einer Lagerung von 4 Tagen durchgeführt wurden, zeigten Werte, die sich um 2 bis 4 g/cm Streifenbreite bewegten. Zusätzlich erfordert eine wischfeste Aushärtung eine längere Verweilzeit im Trockenkanal.

Die Klebkraftminderung des Tesabandes 659, nach einer Lagerung unter Druck von 7 Tagen bei 60° C im Kontakt mit der Folie, die nach b) siliconisiert worden war, lag unter 6%.

**Patentansprüche**

1. Verfahren zum Herstellen haftungsmindernder Beschichtungen auf dünnschichtigen Substraten durch Auftragen eines lösungsmittelhaltigen Gemisches, bestehend aus

(A) $\alpha,\omega$-Polyorganosiloxandiolen,
(B) Si-H-Gruppen-haltigen Organosiloxanen,
(C) Alkyl- bzw. Alkenyltriacetoxysilanen,
(D) organischen Isocyanaten mit mehr als zwei Isocyanatresten,
(E) Härtungskatalysatoren,

dadurch gekennzeichnet, daß dem Gemisch vor der Aushärtung das Umsetzungsprodukt (F) eines Chlormethylpolymethylsiloxans der Formel

$$ClCH_2(CH_3)_2Si[OSi(CH_3)CH_2Cl]_nOSi(CH_3)_2CH_2Cl$$

wobei n einen Wert von 2—200 annehmen kann,
mit höchstens äquivalenten molaren Mengen eines primären Amins, dessen organischer Rest aus einem Alkyl-, Alkenyl oder einem Cycloalkylrest mit 4—18 C-Atomen besteht und wobei jedoch mindestens 20% der Chlormethylsiloxyeinheiten umgesetzt werden, in einer Menge von 0,5—10 Gew.-% — bezogen auf die Komponente (A) — eingesetzt wird.

2. Verfahren nach Anspruch 1, dadurch gekennzeichnet, daß das Amin zur Herstellung des Umsetzungsproduktes (F) Cyclohexylamin ist.

3. Verfahren nach einem der Ansprüche 1 oder 2, dadurch gekennzeichnet, daß Beschichtungen auf Papier hergestellt werden.

**Claims**

1. Process for the production of adhesion-reducing coatings on thin substrates by applying a solvent-containing mixture consisting of

(A) $\alpha,\omega$-polyorganosiloxanediols,
(B) organosiloxanes containing Si-H groups,
(C) alkyl- or alkenyl-triacetoxysilanes,
(D) organic isocyanates with more than two isocyanate radicals and
(E) hardening catalysts,

characterised in that before hardening, the reaction product (F) of a chloromethylpolymethylsiloxane of the formula

$$ClCH_2(CH_3)_2Si[OSi(CH_3)CH_2Cl]_nOSi(CH_3)_2CH_2Cl$$

wherein n can have a value from 2—200,
with at most equivalent molar amounts of a primary amine, the organic radical of which consists of an alkyl, alkenyl or cycloalkyl radical with 4—18 C atoms, at least 20%, however, of the chloromethylsiloxy units being reacted, is added to the mixture in an amount of 0.5 to 10% by weight — based on component (A).

2. Process according to Claim 1, characterised in that the amine for the preparation of the reaction product (F) is cyclohexylamine.

3. Process according to one of Claims 1 or 2, characterised in that coatings are produced on paper.

**Revendications**

1. Procédé pour la préparation de revêtements diminuant l'adhérence sur des substrats en couche mince, par dépôt d'un mélange contenant un solvant, consistant en

(A) des $\alpha,\omega$-polyorganosiloxannediols,
(B) des organosiloxannes contenant des restes Si-H,
(C) des alkyl- ou alcényltriacétoxysilanes,
(D) des isocyanates organiques ayant plus de deux restes isocyanates,
(E) des catalyseurs de durcissement,

caractérisé en ce que l'on ajoute au mélange avant le durcissement le produit de réaction (F) d'un

chlorométhylpolyméthylsiloxanne de formule

$$ClCH_2(CH_3)_2Si[OSi(CH_3)CH_2Cl]_nOSi(CH_3)_2CH_2Cl$$

dans laquelle n peut prendre une valeur de 2 — 200, avec au plus des quantités équivalentes d'une amine primaire dont le reste organique consiste en un reste alkyle ou un reste cycloalkyle en $C_4-C_{18}$, mais au moins 20% des motifs chlorométhylsiloxy ayant réagi, en une quantité de 0,5 — 10% en poids par rapport au composant (A).

2. Procédé selon la revendication 1, caractérisé en ce que l'amine pour la préparation du produit de réaction (F) est la cyclohexylamine.

3. Procédé selon l'une des revendications 1 ou 2, caractérisé en ce que l'on prépare des enduits sur papier.